# EUROPÄISCHE PATENTANMELDUNG

(11) **EP 3 486 380 A1**
(43) Veröffentlichungstag der Anmeldung: **22.05.2019**
(21) Anmeldenummer: 18206028.5
(22) Anmeldetag: 13.11.2018
(51) Int. Cl.: E03C 1/02, H02G 3/08

(54) **UNTERPUTZEINBAUKÖRPER FÜR EINE SANITÄRARMATUR MIT EINER KABELDURCHFÜHRUNG**

(30) Priorität: 17.11.2017 DE 102017127151
(71) Anmelder: Grohe AG, 58675 Hemer (DE)
(72) Erfinder: Lazic, Dajana, 58644 Iserlohn (DE); Luig, Frank-Thomas, Menden (DE); Mainka, David, 58640 Iserlohn (DE); Tüshaus, Jan Philipp, 58675 Hemer (DE); Jung, Andreas, 58730 Fröndenberg (DE)

(57) **Zusammenfassung**

Unterputzeinbaukörper (1) für eine Sanitärarmatur, zumindest aufweisend:
a) ein Gehäuse (2) mit einem Aufnahmeraum (3) für eine Funktionseinheit (4),
b) einen Anschlusskörper (5) mit einer Mehrzahl von Anschlüssen (6, 7, 8, 9, 10) für Flüssigkeitsleitungen, wobei der Anschlusskörper (5) zumindest teilweise in dem Aufnahmeraum (3) angeordnet ist,
c) ein Funktionselement (11), das zumindest teilweise in dem Aufnahmeraum (3) angeordnet ist,
d) ein Kabel (12), das mit dem Funktionselement (11) verbunden ist und das durch einen Anschluss (6, 7, 8, 9, 10) der Mehrzahl von Anschlüssen (6, 7, 8, 9, 10) für die Flüssigkeitsleitungen des Anschlusskörpers (5) in den Aufnahmeraum (3) geführt ist, und
e) eine Dichtung (15), die das Kabel (12) im Bereich des Anschlusses (6, 7, 8, 9, 10) umgibt und den Anschluss (6, 7, 8, 9, 10) abdichtet.

## Beschreibung

Die vorliegende Erfindung betrifft einen Unterputzeinbaukörper für eine Sanitärarmatur, der innerhalb eines Mauerdurchbruchs, einer Vertiefung in einer Wand oder einem sonstigen Träger befestigbar ist. Insbesondere bei Einbauwänden und Vorwandsystemen haben sich solche Unterputzeinbaukörper bewährt.

Unterputzeinbaukörper dienen der Befestigung einer Funktionseinheit in einer Mauer, Wand oder einem Träger. Die Funktionseinheit kann eine Thermostatkartusche und/oder ein Ventil umfassen. Mittels der Thermostatkartusche sind ein Kaltwasser und ein Warmwasser zu einem Mischwasser mit einer gewünschten Mischwassertemperatur mischbar, wobei eine Entnahmemenge des Mischwassers mittels des Ventils steuerbar ist. An den Unterputzeinbaukörper ist insbesondere zumindest eine Mischwasserleitung anschließbar, über die das Mischwasser der Sanitärarmatur, wie zum Beispiel einer Handbrause, Kopfbrause, Düse, Auslauf und/oder dergleichen an einer Dusche und/oder Badewanne, zuführbar ist. Der Kaltwasseranschluss ist regelmäßig mit einem Kaltwasserhausanschluss und der Warmwasseranschluss regelmäßig mit einem Warmwasserhausanschluss über entsprechende (Rohr-)Leitungen verbunden. Neben rein mechanischen Funktionselementen kann die Funktionseinheit auch elektrische und/oder elektronische Funktionselemente umfassen. Diese müssen regelmäßig mit einem Kabel zur Energieversorgung und/oder zum Datenaustausch verbunden werden. Hierzu muss das Kabel aus einer Umgebung in den Unterputzeinbaukörper geführt werden, wozu die Gehäuse der bekannten Unterputzeinbaukörper vorgeprägte Ausbruchstellen, eingespritzte Membrane zum Einschneiden oder Prägemarkierungen zum Ausbrechen aufweisen. Diese haben jedoch den Nachteil, dass die Unterputzeinbaukörper gegenüber der Umgebung nicht mehr (flüssigkeitsdicht) abgedichtet sind. Weiterhin sind auch Unterputzeinbaukörper bekannt, die speziell für Kabel vorgesehene Öffnungen aufweisen, an die die Kabel wasserdicht verschraubbar sind. Solche speziell für Kabel vorgesehene Öffnungen erhöhen jedoch den Herstellungsaufwand der Unterputzeinbaukörper.

Aufgabe der Erfindung ist daher, die mit Bezug auf den Stand der Technik geschilderten Probleme zumindest teilweise zu lösen und insbesondere einen Unterputzeinbaukörper anzugeben, in den ein Kabel ohne zusätzliche Kabelöffnungen und ohne die Dichtigkeit des Unterputzeinbaukörpers zu beeinträchtigen führbar ist. Es ist darauf hinzuweisen, dass die in den abhängig formulierten Patentansprüchen einzeln aufgeführten Merkmale in beliebiger technologisch sinnvoller Weise miteinander kombiniert werden können und weitere Ausgestaltungen der Erfindung definieren. Darüber hinaus werden die in den Patentansprüchen angegebenen Merkmale in der Beschreibung näher präzisiert und erläutert, wobei weitere bevorzugte Ausgestaltungen der Erfindung dargestellt werden.

Diese Aufgaben werden gelöst mit einem Unterputzeinbaukörper gemäß den Merkmalen des unabhängigen Patentanspruchs. Weitere vorteilhafte Ausgestaltungen des Unterputzeinbaukörpers sind in den abhängig formulierten Patentansprüchen angegeben.

Der erfindungsgemäße Unterputzeinbaukörper für eine Sanitärarmatur weist zumindest die folgenden Komponenten auf:
a) ein Gehäuse mit einem Aufnahmeraum für eine Funktionseinheit,
b) einen Anschlusskörper mit einer Mehrzahl von Anschlüssen für Flüssigkeitsleitungen, wobei der Anschlusskörper zumindest teilweise in dem Aufnahmeraum angeordnet ist,
c) ein Funktionselement, das zumindest teilweise in dem Aufnahmeraum angeordnet ist,
d) ein Kabel, das mit dem Funktionselement verbunden ist und das durch einen Anschluss der Mehrzahl von Anschlüssen für die Flüssigkeitsleitungen des Anschlusskörpers in den Aufnahmeraum geführt ist, und
e) eine Dichtung, die das Kabel im Bereich des Anschlusses umgibt und den Anschluss abdichtet.

Der Unterputzeinbaukörper wird insbesondere für Sanitärarmaturen verwendet, die im Zusammenhang mit Duschen und/oder Badewannen zur Anwendung kommen. Bei den Sanitärarmaturen kann es sich insbesondere um Wasserausläufe, Handbrausen, Kopfbrausen, Düsen und/oder dergleichen handeln. Solche Unterputzeinbaukörper werden regelmäßig innerhalb eines Mauerdurchbruchs, einer Vertiefung in einer Wand oder einem sonstigen Träger befestigt und dienen der Aufnahme einer Funktionseinheit. Die Funktionseinheit umfasst insbesondere Funktionselemente wie zum Beispiel ein Thermostat, eine Thermostatkartusche und/oder zumindest ein Ventil. Mittels des Thermostats oder der Thermostatkartusche sind insbesondere ein Kaltwasser und ein Warmwasser zu einem Mischwasser mit einer gewünschten Mischwassertemperatur mischbar. Das Kaltwasser kann dabei eine Kaltwassertemperatur aufweisen, die insbesondere maximal 25 °C (Celsius), bevorzugt 1 °C bis 25 °C, besonders bevorzugt 5 °C bis 20 °C beträgt. Das Warmwasser kann eine Warmwassertemperatur aufweisen, die insbesondere maximal 90 °C, bevorzugt 25 °C bis 90 °C, besonders bevorzugt 55 °C bis 65 °C beträgt. Das Mischwasser kann von dem Thermostat oder der Thermostatkartusche beispielsweise mit zumindest einer Leitung in der Funktionseinheit dem zumindest einen Ventil zugeführt werden, mittels dem eine Entnahmemenge des Mischwassers über die Sanitärarmatur steuerbar ist. Der Unterputzeinbaukörper weist ein Gehäuse mit einem Aufnahmeraum auf, in dem die Funktionseinheit zumindest teilweise angeordnet ist. Das Gehäuse kann im Wesentlichen zylinderförmig und/oder zumindest teilweise aus Kunststoff und/oder Metall bestehen. Weiterhin ist das Gehäuse vorzugsweise flüssigkeitsdicht ausgeführt.

Der Unterputzeinbaukörper weist zudem einen Anschlusskörper mit einer Mehrzahl von Anschlüssen für eine Flüssigkeitsleitung auf, der ebenfalls zumindest teilweise in dem Aufnahmeraum des Gehäuses angeordnet ist. Der Anschlusskörper ist insbesondere zumindest teilweise aus Metall, wie zum Beispiel Messing, und/oder (im Wesentlichen) ringförmig ausgebildet. An jeden Anschluss der Mehrzahl von Anschlüssen ist eine Flüssigkeitsleitung anschließbar, über die das Kaltwasser und/oder das Warmwasser dem Unterputzeinbaukörper beziehungsweise dem Thermostat, der Thermostatkartusche und/oder dem zumindest einem Ventil der Funktionseinheit oder das Mischwasser von dem Unterputzeinbaukörper der Sanitärarmatur zuführbar ist. An jedem Anschluss der Mehrzahl von Anschlüssen ist somit eine Flüssigkeitsleitung flüssigkeitsdicht befestigbar. Insbesondere kann die Flüssigkeitsleitung an die Anschlüsse angeschraubt werden, wozu die Anschlüsse ein (Innen-)Gewinde aufweisen können. Das Gewinde weist insbesondere einen Durchmesser von 1/2" (Zoll) auf. Alle Anschlüsse der Mehrzahl von Anschlüssen sind zudem bevorzugt (im Wesentlichen) identisch ausgebildet. Dies bedeutet insbesondere, dass zu dem Unterputzeinbaukörper hinführende und/oder wegführende Flüssigkeitsleitungen (ohne Anpassungen oder Adapter) an jeden der Anschlüsse der Mehrzahl der Anschlüsse anschließbar sind. Hierzu können die Anschlüsse alle den gleichen Innendurchmesser und/oder Außendurchmesser aufweisen. Bevorzug weist der Anschlusskörper einen Anschluss für eine Flüssigkeitsleitung für Kaltwasser, einen Anschluss für eine Flüssigkeitsleitung für Warmwasser und drei Anschlüsse für jeweils eine Flüssigkeitsleitung für Mischwasser auf. Die Anschlüsse für die Flüssigkeitsleitung für Kaltwasser und für die Flüssigkeitsleitung für Warmwasser sind insbesondere parallel zueinander orientiert. Die Anschlüsse für die Flüssigkeitsleitungen für das Mischwasser sind bevorzugt um einen Winkel, insbesondere 90°, versetzt zueinander an einer Umfangsfläche des Anschlusskörpers angeordnet. Bevorzug weist der Anschlusskörper drei Anschlüsse für die Mischwasserleitungen auf. Über die Anschlüsse für die Flüssigkeitsleitungen für das Mischwasser ist das Mischwasser insbesondere einer Mehrzahl von Sanitärarmaturen zuführbar, beispielsweise einer Handbrause und einer Kopfbrause. Nicht benötigte Anschlüsse können beispielsweise mittels eines Verschlusses flüssigkeitsdicht verschlossen werden. Hierdurch können standardisierte Anschlusskörper verwendet werden, deren Anzahl von Anschlüssen für Flüssigkeitsleitungen nicht auf den konkreten Anwendungsfall angepasst werden muss.

Zumindest eines der Funktionselemente der Funktionseinheit ist mit einem Kabel zur Energieversorgung oder zum Datenaustausch verbunden. Unter einem Kabel ist insbesondere ein mit Isolierstoffen ummantelter ein- oder mehradriger Verbund von Adern (Einzelleitungen) zu verstehen, die der Übertragung von Energie und/oder Informationen dienen. Als Isolierstoffe kommen üblicherweise Kunststoffe zur Anwendung, welche die als Leiter genutzten Adern umgeben und gegeneinander isolieren. Die Zuführung des (flexiblen) Kabels in den Unterputzeinbaukörper beziehungsweis zu dem Funktionselement erfolgt durch einen der Anschlüsse der Mehrzahl von Anschlüssen für die Flüssigkeitsleitungen des Anschlusskörpers. Dies bedeutet mit anderen Worten, dass zumindest einer der Anschlüsse der Mehrzahl von Anschlüssen für Flüssigkeitsleitungen nicht zum Anschluss einer Flüssigkeitsleitung verwendet wird, sondern stattdessen zur Durchführung des Kabels in den Aufnahmeraum. Hierdurch muss an dem Unterputzeinbaukörper keine separate Öffnung für das Kabel vorgesehen sein, wodurch sich der Herstellungsaufwand des Unterputzeinbaukörpers reduziert. In entsprechender Weise können auch eine Mehrzahl von Kabel separat durch mehrere Anschlüsse geführt werden.

Das Kabel wird im Bereich des Anschlusses von einer Dichtung umgeben, die den Anschluss (flüssigkeitsdicht) abdichtet. Hierdurch wird verhindert, dass Flüssigkeit aus dem Unterputzeinbaukörper in die Umgebung, beispielsweise in eine Wand, austritt und dort zu Beschädigungen führt. Insbesondere ist die Dichtung als separates Bauteil ausgeführt oder kann formschlüssig mit dem Kabel verbunden sein. Das Kabel verläuft insbesondere durch einen zentralen Bereich der Dichtung, sodass das Kabel mit einem maximalen Abstand von dem Gewinde des Anschlusses durch den Anschluss geführt wird. Hierdurch können Beschädigungen des Kabels vermieden werden. Zudem kann das Kabel (separat von der Dichtung) austauschbar sein. Wenn das Kabel außerhalb des Gehäuses zudem beispielsweise durch ein Leerrohr verläuft, kann das Kabel (beispielsweise bei einer Beschädigung) ausgetauscht werden, ohne dass die Mehrzahl von Anschlüssen zugänglich sein muss. Dies ist besonders vorteilhaft, wenn der Unterputzeinbaukörper in einer Wand eingebaut ist und folglich die Mehrzahl von Anschlüssen nicht ohne weiteres zugänglich sind. Die Dichtung ist insbesondere ringförmig ausgebildet und/oder füllt einen (ringförmigen) Raum zwischen dem Kabel und dem Anschluss.

Ebenfalls vorteilhaft ist es, wenn es sich bei der Mehrzahl von Anschlüssen für Flüssigkeitsleitungen um Anschlüsse für eine Flüssigkeitszuführleitung oder um Anschlüsse für eine Flüssigkeitsabführleitung handelt. Insbesondere handelt es sich bei der Mehrzahl von Anschlüssen für eine Flüssigkeitsleitung um Anschlüsse für eine Flüssigkeitszuführleitung und/oder um Anschlüsse für eine Flüssigkeitsabführleitung. Über den Anschluss für eine Flüssigkeitszuführleitung sind dem Unterputzeinbaukörper insbesondere das Kaltwasser und/oder das Warmwasser zuführbar. Über die Anschlüsse für die Flüssigkeitsabführleitung ist das Mischwasser von dem Unterputzeinbaukörper insbesondere zumindest einer Sanitärarmatur zuführbar.

Zudem ist es vorteilhaft, wenn alle Anschlüsse ein Gewinde aufweisen, deren Durchmesser identisch sind. Der Durchmesser des Gewindes kann beispielsweise 1/2" (Zoll) aufweisen. Hierdurch wird sichergestellt, dass an alle Anschlüsse die gleichen Flüssigkeitsleitungen anschließbar oder das Kabel durch jeden der Anschlüsse (mit der gleichen Dichtung) führbar ist.

Vorzugsweise weist die Dichtung einen Dichtflansch auf. Der Dichtflansch umgibt die Dichtung insbesondere ringförmig. Weiterhin weist der Dichtflansch insbesondere einen Durchmesser auf, der größer ist als ein (Innen-)Durchmesser des Anschlusses, durch den das Kabel in den Aufnahmeraum geführt ist. Weiterhin kann der Dichtflansch insbesondere an einer (Innen-)Wand des Anschlusskörpers anliegen.

Weiterhin ist es vorteilhaft, wenn der Dichtflansch an einer Innenwand des Anschlusskörpers anliegt.

Ebenfalls vorteilhaft ist es, wenn die Innenwand schräg zu einer Längsachse des Anschlusses verläuft. Unter schräg ist insbesondere zu verstehen, dass die Innenwand nicht orthogonal zu der Längsachse des Anschlusses verläuft. Insbesondere verläuft die Innenwand mit einem Winkel von beispielsweise 5° bis 30° zu der Längsachse des Anschlusses.

Ebenfalls vorteilhaft ist es, wenn der Dichtflansch durch die Funktionseinheit an die Innenwand gepresst wird, sodass der Aufnahmeraum gegenüber einer Umgebung abgedichtet ist. Hierzu weist die Funktionseinheit insbesondere eine Fläche auf, die im Wesentlichen parallel zu der Innenwand des Anschlusskörpers im Bereich des Anschlusses, durch den das Kabel geführt ist, verläuft. Der Dichtflansch kann dadurch besonders leicht beim Einsetzen der Funktionseinheit in den Aufnahmeraum an die Innenwand des Anschlusskörpers gepresst werden, wodurch der Aufnahmeraum gegenüber der Umgebung (flüssigkeitsdicht) abgedichtet wird.

Zudem ist es vorteilhaft, wenn die Dichtung zumindest eine Dichtlippe aufweist, mittels der die Dichtung in dem Anschluss sicherbar ist. Die zumindest eine Dichtlippe umgibt die Dichtung insbesondere ringförmig. Weiterhin kann die Dichtung insbesondere in einer Längsrichtung der Dichtung eine Mehrzahl von Dichtringen aufweisen. Zur Sicherung der Dichtung in dem Anschluss kann zumindest eine Dichtlippe beispielsweise an einem Durchmesserabsatz des Anschlusses zur Anlage kommen oder die zumindest eine Dichtlippe in einer Nut des Anschlusses anordenbar sein.

Ebenfalls vorteilhaft ist es, wenn das Kabel zumindest teilweise von einem Rohr umgeben ist und wobei das Rohr mittels eines Anschlussstücks an dem Anschluss befestigt ist. Bei dem zumindest einen Rohr handelt es sich insbesondere um ein Wellrohr. Das zumindest eine Rohr umgibt das Kabel zumindest teilweise insbesondere außerhalb des Unterputzeinbaukörpers. Das Anschlussstück weist hier insbesondere ein 1/2" (Außen-)Gewinde auf, sodass das Anschlussstück insbesondere flexibel an jedem der Anschlüsse befestigbar ist.

Darüber hinaus ist es vorteilhaft, wenn die Funktionseinheit im Bereich des Anschlusses eine Aussparung für das Kabel aufweist. Hierdurch wird gewährleistet, dass das Kabel beim Einsetzen der Funktionseinheit in den Aufnahmeraum nicht beschädigt wird. Die Aussparung ist insbesondere an einer Umfangsfläche der Funktionseinheit ausgebildet.

Die Erfindung sowie das technische Umfeld werden nachfolgend anhand der Figuren näher erläutert. Es ist darauf hinzuweisen, dass die Figuren eine besonders bevorzugte Ausführungsvariante der Erfindung zeigen, diese jedoch nicht darauf beschränkt ist. Dabei sind gleiche Bauteile in den Figuren mit denselben Bezugszeichen versehen. Es zeigt beispielhaft und schematisch:
- Fig. 1:: einen Unterputzeinbaukörper im Längsschnitt;
- Fig. 2:: eine Querschnittsdarstellung eines Anschlusskörpers des Unterputzeinbaukörpers mit einem durch einen Anschluss des Anschlusskörpers geführten Kabel;
- Fig. 3:: eine Teilansicht eines Spülkörpers des Anschlusskörpers aus Richtung der in der Fig. 2 gezeigten Pfeile III;
- Fig. 4:: eine vergrößerte Darstellung eines der in der Fig. 2 gezeigten Anschlüsse des Anschlusskörpers, durch den ein Kabel geführt ist;
- Fig. 5:: eine vergrößerte Darstellung einer in der Fig. 4 gezeigten Dichtung des Kabels;
- Fig. 6:: die in der Fig. 4 gezeigte vergrößerte Darstellung des Anschlusses nachdem eine Funktionseinheit in den Unterputzeinbaukörper eingesetzt wurde; und
- Fig. 7:: eine perspektivische Darstellung der Dichtung.

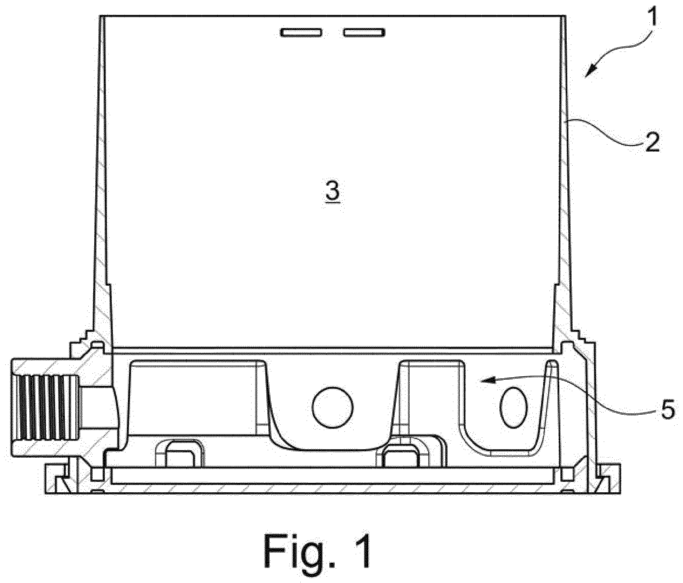

Die Fig. 1 zeigt einen Unterputzeinbaukörper 1 für eine hier nicht gezeigte Sanitärarmatur im Längsschnitt. Der Unterputzeinbaukörper 1 weist ein im Wesentlichen zylindrisches Gehäuse 2 mit einem Aufnahmeraum 3 auf, in dem ein ringförmiger Anschlusskörper 5 angeordnet ist.

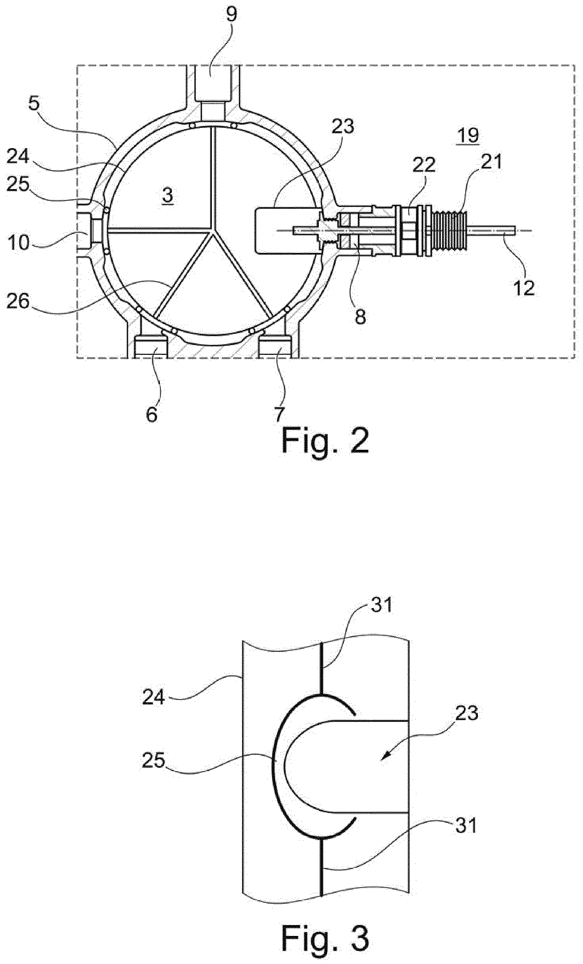

Die Fig. 2 zeigt den Anschlusskörper 5 in einer Querschnittsdarstellung ohne das in der Fig. 1 gezeigte Gehäuse 2. Der Anschlusskörper 5 weist einen ersten Anschluss 6 für eine hier nicht gezeigte Flüssigkeitsleitung auf, mittels der ein Warmwasser dem Anschlusskörper 5 zuführbar ist. Weiterhin weist der Anschlusskörper 5 einen zweiten Anschluss 7 für eine Flüssigkeitsleitung auf, mittels der ein Kaltwasser dem Anschlusskörper 5 zuführbar ist. Zudem weist der Anschlusskörper 5 einen dritten Anschluss 8 für eine Flüssigkeitsleitung, einen vierten Anschluss 9 für eine Flüssigkeitsleitung und einen fünften Anschluss 10 für eine Flüssigkeitsleitung auf, mittels denen ein Mischwasser, das durch ein Thermostat aus dem Warmwasser und dem Kaltwasser gemischt ist, hier nicht gezeigten Sanitärarmaturen zuführbar sind. Hierzu sind an den dritten Anschluss 8, den vierten Anschluss 9 und den fünften Anschluss 10 die hier nicht gezeigten Flüssigkeitsleitungen befestigbar. Der erste Anschluss 6, der zweite Anschluss 7, der dritte Anschluss 8, der vierte Anschluss 9 und der fünfte Anschluss 10 sind im Wesentlichen identisch ausgebildet, sodass an allen Anschlüssen 6, 7, 8, 9, 10 die gleichen Flüssigkeitsleitungen anschließbar sind. Bei der hier gezeigten Ausführungsvariante ist durch den dritten Anschluss 8 ein Kabel 12 aus einer Umgebung 19 in den Aufnahmeraum 3 geführt. Außerhalb des Anschlusskörpers 5 ist das Kabel 12 von einem Rohr 21 umgeben, das hier nach Art eines Wellrohrs zum Schutz des Kabels 12 ausgebildet ist. Das Rohr 21 ist mittels eines Anschlussstücks 22 an den dritten Anschluss 8 des Anschlusskörpers 5 geschraubt. Der Anschlusskörper 5 weist im Bereich des Aufnahmeraums 3 einen im Wesentlichen kreisförmigen Spülkörper 24 mit Spülleitungen 26 auf, der zur Montage des Anschlusskörpers 5 verwendet und anschließend entfernt wird. Die Spülleitungen 26 verbinden den ersten Anschluss 6, den zweiten Anschluss 7, den vierten Anschluss 9 und den fünften Anschluss 10 miteinander, sodass die an diese anschließbaren Flüssigkeitsleitungen nach der Montage des in der Fig. 1 gezeigten Unterputzeinbaukörpers 1 mit Spülwasser gespült und vor der Inbetriebnahme der Sanitärarmaturen gereinigt werden können. Der Spülkörper 24 weist im Bereich des ersten Anschlusses 6, des zweiten Anschlusses 7, des vierten Anschlusses 9 und des fünften Anschlusses 10 eine seiner Umfangsfläche eine Spülkörperdichtung 25 auf, sodass kein Spülwasser aus dem Spülkörper 24 in den Aufnahmeraum 3 austreten kann. Die Spülkörperdichtung 25 kann in den Bereichen des ersten Anschlusses 6, des zweiten Anschlusses 7, des vierten Anschlusses 9 und des fünften Anschlusses 10 nach Art von O-Ringen ausgebildet sein, die mit in der Fig. 3 gezeigten Dichtungsstegen 31 ringförmig miteinander verbunden sein können. Weiterhin weist der Spülkörper 24 im Bereich des dritten Anschlusses 8 eine erste Aussparung 23 auf, durch die das Kabel 12 in den Aufnahmeraum 3 führbar ist.

Die Fig. 3 zeigt eine vergrößerte Teilansicht des Spülkörpers 24 im Bereich der ersten Aussparung 23 in Richtung der in der Fig. 2 gezeigten Pfeile III. Der Spülkörper 24 weist im hier gezeigten Bereich der ersten Aussparung 23 keinen O-Ring auf. Stattdessen ist die Spülkörperdichtung 25 im Bereich der ersten Aussparung 23 C-förmig ausgebildet.

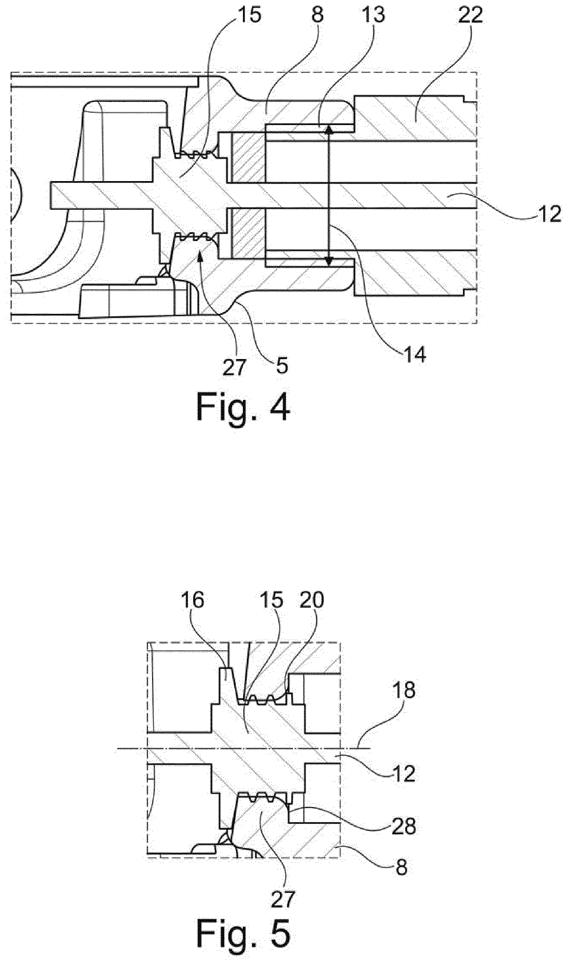

Die Fig. 4 zeigt eine vergrößerte Teilansicht des in der Fig. 2 gezeigten Anschlusskörpers 5 im Bereich des dritten Anschlusses 8. Zu erkennen ist hier, dass das in der Fig. 2 gezeigte Rohr 21 mit dem Anschlussstück 22 an ein Gewinde 13 des dritten Anschlusses 8 befestigt ist. Das Gewinde 13 weist einen Durchmesser 14 von 1/2" auf. Alle in der Fig. 2 gezeigten Anschlüsse 6, 7, 8, 9, 10 sind (abgesehen von ihrer Orientierung) im Wesentlichen identisch ausgebildet und weisen daher ein Gewinde 13 mit dem gleichen Durchmesser 14 auf. Das Kabel 12 weist eine Dichtung 15 auf, die das Kabel 10 im Bereich des dritten Anschlusses 8 ringförmig umgibt und den dritten Anschluss 8 im Bereich einer Durchmesserstufe 27 des dritten Anschlusses 8 abdichtet. Die Dichtung 15 kann entweder einstückig beziehungsweise formschlüssig mit dem Kabel 12 oder als separates Bauteil ausgebildet sein.

Die Fig. 5 zeigt eine vergrößerte Darstellung der in der Fig. 4 gezeigten Dichtung 15. Die Dichtung 15 weist einen Dichtungsflansch 16 und eine Mehrzahl von parallel zu einer Längsachse 18 der Dichtung 15 nebeneinander angeordnete ringförmige beziehungsweise umlaufende Dichtlippen 20 auf. Die rechte Dichtlippe 20 kontaktiert dabei eine Stirnfläche 28 der Durchmesserstufe 27 des dritten Anschlusses 8, sodass die Dichtung 15 in dem dritten Anschluss 8 gesichert ist. Hierdurch kann sich die Dichtung 15 bei auf das Kabel 12 wirkenden Kräften nicht von dem dritten Anschluss 8 lösen.

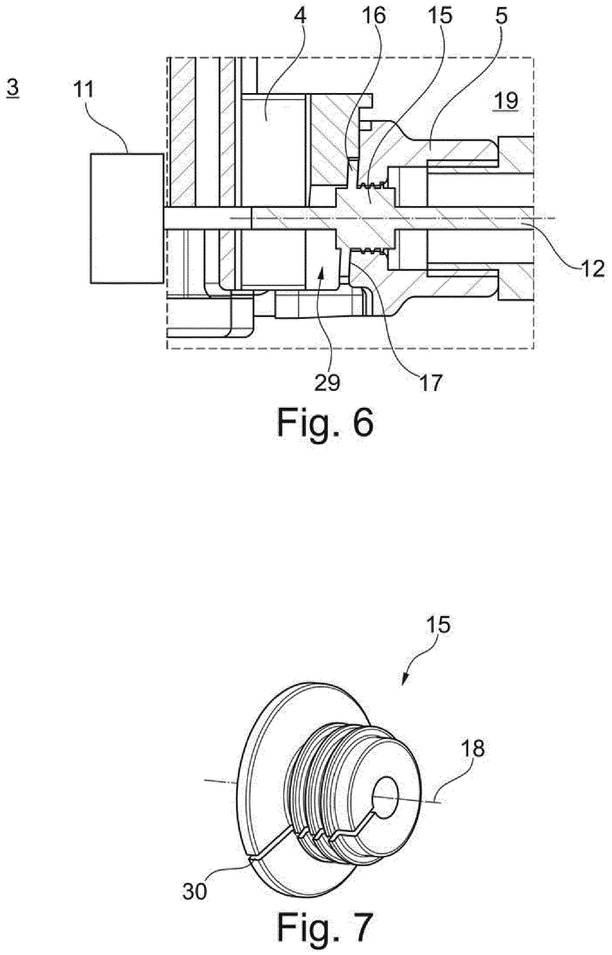

Die Fig. 6 zeigt die in der Fig. 4 gezeigte Teilansicht des Anschlusskörpers 5, nachdem der in der Fig. 2 gezeigte Spülkörper 24 entfernt wurde und stattdessen in den Aufnahmeraum 3 eine Funktionseinheit 4 mit einem Funktionselement 11, bei dem es sich hier um ein Thermostat handelt, eingesetzt wurde. Die Funktionseinheit 4 ist mit dem Kabel 12 verbunden, sodass über das Kabel 12 Energie von einer hier nicht gezeigten Energiequelle und/oder Steuersignale (beispielsweise von einer hier nicht gezeigten Steuerung) zu dem Funktionselement 11 leitbar sind. Der Dichtflansch 16 der Dichtung 15 wird durch eine Umfangsfläche der Funktionseinheit 4 gegen eine schräg zu der Längsachse 18 des dritten Anschlusses 8 verlaufende Innenwand 17 des Anschlusskörpers 5 gepresst, sodass der Aufnahmeraum 3 gegenüber der Umgebung 19 abgedichtet ist. Die Funktionseinheit 4 weist an ihrer Umfangsfläche zudem eine zweite Aussparung 29 für das Kabel 12 auf, sodass das Kabel 12 beim Einsetzen der Funktionseinheit 4 in den Anschlusskörper 5 nicht beschädigt wird.

Die Fig. 7 zeigt die Dichtung 15 in einer perspektivischen Darstellung. Die Dichtung 15 ist hier als separates Bauteil dargestellt und weist parallel zu der Längsachse 18 einen Schlitz 30 auf, sodass die Dichtung 15 leicht an dem Kabel 12 befestigbar ist.

Durch die vorliegende Erfindung ist ein Kabel flüssigkeitsdicht ohne zusätzliche Öffnungen in einen Aufnahmeraum 3 des Unterputzeinbaukörpers 1 führbar.

### Bezugszeichenliste

- 1: Unterputzeinbaukörper
- 2: Gehäuse
- 3: Aufnahmeraum
- 4: Funktionseinheit
- 5: Anschlusskörper
- 6: erster Anschluss
- 7: zweiter Anschluss
- 8: dritter Anschluss
- 9: vierte Anschluss
- 10: fünfter Anschluss
- 11: Funktionselement
- 12: Kabel
- 13: Gewinde
- 14: Durchmesser
- 15: Dichtung
- 16: Dichtflansch
- 17: Innenwand
- 18: Längsachse
- 19: Umgebung
- 20: Dichtlippe
- 21: Rohr
- 22: Anschlussstück
- 23: erste Aussparung
- 24: Spülkörper
- 25: Spülkörperdichtung
- 26: Spülleitung
- 27: Durchmesserstufe
- 28: Stirnfläche
- 29: zweite Aussparung
- 30: Schlitz
- 31: Dichtungssteg

## Patentansprüche

1. Unterputzeinbaukörper (1) für eine Sanitärarmatur, zumindest aufweisend:
a) ein Gehäuse (2) mit einem Aufnahmeraum (3) für eine Funktionseinheit (4),
b) einen Anschlusskörper (5) mit einer Mehrzahl von Anschlüssen (6, 7, 8, 9, 10) für Flüssigkeitsleitungen, wobei der Anschlusskörper (5) zumindest teilweise in dem Aufnahmeraum (3) angeordnet ist,
c) ein Funktionselement (11), das zumindest teilweise in dem Aufnahmeraum (3) angeordnet ist,
d) ein Kabel (12), das mit dem Funktionselement (11) verbunden ist und das durch einen Anschluss (6, 7, 8, 9, 10) der Mehrzahl von Anschlüssen (6, 7, 8, 9, 10) für die Flüssigkeitsleitungen des Anschlusskörpers (5) in den Aufnahmeraum (3) geführt ist, und
e) eine Dichtung (15), die das Kabel (12) im Bereich des Anschlusses (6, 7, 8, 9, 10) umgibt und den Anschluss (6, 7, 8, 9, 10) abdichtet.

2. Unterputzeinbaukörper (1) nach Patentanspruch 1, wobei es sich bei der Mehrzahl von Anschlüssen (6, 7, 8, 9, 10) für Flüssigkeitsleitungen um Anschlüsse (6, 7) für eine Flüssigkeitszuführleitung oder um Anschlüsse (8, 9, 10) für eine Flüssigkeitsabführleitung handelt.

3. Unterputzeinbaukörper (1) nach einem der vorhergehenden Patentansprüche, wobei alle Anschlüsse (6, 7, 8, 9, 10) ein Gewinde (13) aufweisen, deren Durchmesser (14) identisch sind.

4. Unterputzeinbaukörper (1) nach einem der vorhergehenden Patentansprüche, wobei die Dichtung (15) einen Dichtflansch (16) aufweist.

5. Unterputzeinbaukörper (1) nach Patentanspruch 4, wobei der Dichtflansch (16) an einer Innenwand (17) des Anschlusskörpers (5) anliegt.

6. Unterputzeinbaukörper (1) nach Patentanspruch 5, wobei die Innenwand (17) schräg zu einer Längsachse (18) des Anschlusses (6, 7, 8, 9, 10) verläuft.

7. Unterputzeinbaukörper (1) nach Patentanspruch 5 oder 6, wobei der Dichtflansch (16) durch die Funktionseinheit (4) an die Innenwand (17) gepresst wird, sodass der Aufnahmeraum (3) gegenüber einer Umgebung (19) abgedichtet ist.

8. Unterputzeinbaukörper (1) nach einem der vorhergehenden Patentansprüche, wobei die Dichtung (15) zumindest eine Dichtlippe (20) aufweist, mittels der die Dichtung (15) in dem Anschluss (6, 7, 8, 9, 10) sicherbar ist.

9. Unterputzeinbaukörper (1) nach einem der vorhergehenden Patentansprüche, wobei das Kabel (12) zumindest teilweise von einem Rohr (21) umgeben ist und wobei das Rohr (21) mittels eines Anschlussstücks (22) an dem Anschluss (6, 7, 8, 9, 10) befestigt ist.

10. Unterputzeinbaukörper (1) nach einem der vorhergehenden Patentansprüche, wobei die Funktionseinheit (4) im Bereich des Anschlusses (6, 7, 8, 9, 10) eine Aussparung (23) für das Kabel (12) aufweist.
